# DEMANDE DE BREVET EUROPEEN

(11) **EP 3 819 883 A1**
(43) Date de publication de la demande: **12.05.2021**
(21) Numéro de dépôt: 19306431.8
(22) Date de dépôt: 05.11.2019
(51) Int. Cl.: G07F 19/00, G07F 7/08, G06Q 20/32

(54) **PROCÉDÉ ET SYSTÈME DE COMMUNICATION ENTRE UN LECTEUR DE CARTE À PUCE ET UN DISPOSITIF EXTERNE**

(71) Demandeur: THALES DIS FRANCE SA, 92190 Meudon (FR)
(72) Inventeur: PALADJIAN, Pierre, 13881 Gemenos (FR); ZEAMARI, Ali, 13881 Gemenos Cedex (FR); MARTINEZ, Frédéric, 13881 Gemenos Cedex (FR)
(74) Mandataire: Milharo, Emilien

(57) **Abrégé**

L'invention concerne un procédé pour réaliser une transaction avec un système (1, 1A, 1B, 1C) comprenant un terminal (2) et un dispositif à puce (3), ledit système étant configuré pour communiquer à un utilisateur (6), pendant ladite transaction, des informations de transaction provenant du terminal par l'intermédiaire d'un adaptateur (4), ledit adaptateur étant configuré pour recevoir, avec ou sans fil, lesdites informations (5) et les traduire sous forme vocale ou autre ;
Le procédé est caractérisé en ce qu'il comprend l'étape selon lesquelles lesdites informations de transaction (5) communiquées à l'adaptateur (4) sont obtenues ou collectées dans ou via ladite carte à puce (3).

L'invention concerne également le système correspondant.

## Description

### Domaine de l'invention.

L'invention concerne un procédé pour réaliser une transaction avec un système comprenant un terminal (ou lecteur) de transaction notamment bancaire et un dispositif personnel de transaction notamment de paiement, tel une carte à puce et pour communiquer des informations de transaction à un utilisateur pendant la transaction via un adaptateur.

Plus particulièrement, l'adaptateur peut être configuré pour recevoir, avec ou sans fil, lesdites informations et les traduire sous forme vocale ou autre forme perceptible par l'utilisateur.

L'adaptateur peut être choisi parmi notamment des dispositifs électroniques de communication (téléphone portable, tablette, PDA assistant personnel, accessoires électroniques à porter tels que des montres communicantes ou NFC).

Le dispositif personnel de transaction notamment de paiement peut être également tout support d'applications de transaction notamment de paiement ou tout dispositif de transaction notamment de paiement, dont préférentiellement représenté par une carte à puce. Certaines cartes à puce peuvent comprendre des interfaces d'utilisateur (écran, clavier, capteur biométrique...) et/ou des interfaces de communication diverses (NFC, ISO 7816, Bluetooth™...)

Ces dispositifs de transaction sont pour certains destinés à des transactions électroniques, notamment financières, telles que des achats qui peuvent être réalisés en ligne via internet sur des sites marchands, mais aussi localement chez des commerçants à l'aide d'un terminal de paiement POS (Point of Sale Terminal en terminologie anglo-saxonne), ou à l'aide de distributeurs automatiques de billets (DAB) ou ATM (Automatic Teller Machines en terminologie anglo-saxonne), de distributeurs automatiques de marchandises tels que carburant, boissons, etc., dans des restaurants d'entreprise, des magasins....

### Art antérieur.

Il a été proposé ou recommandé notamment selon des directives supra nationales d'équiper des terminaux de paiement POS avec une interface de communication autre qu'un afficheur par exemple une sortie audio ou autre pour permettre aux personnes malvoyantes d'être informées sur les données de transaction.

### Problème technique.

Lors d'une transaction bancaire à contacts électriques ou sans-contact, l'utilisateur ne voit que les informations affichées sur le terminal de paiement POS. Cependant certaines personnes (par exemple: les malvoyants) ne sont pas en mesure de voir ces informations. Il y a donc actuellement un besoin pour informer autrement l'utilisateur sur les informations de transaction.

Le type de solution visé ci-dessus, avec interface (autre qu'un afficheur) directement sur le terminal de paiement et capable de transmettre les informations de transaction à un utilisateur, n'est pas déployé aujourd'hui et ne semble pas être pratique à déployer sur les équipements bancaires existants.

### Objectif de l'invention.

L'invention a notamment pour objectif de résoudre les inconvénients susvisés ou de satisfaire le besoin pressenti ci-dessus.

Elle cherche notamment à atteindre cet objectif en effectuant le moins de modifications techniques dans l'infrastructure matérielle ou logicielle associée actuellement déployée ou en étant le moins onéreux possible.

### Résumé de l'invention.

A cet effet, l'invention a pour objet un procédé pour réaliser une transaction avec un système comprenant un terminal de transaction (notamment bancaire) et un dispositif de transaction (notamment de paiement), ledit système étant configuré pour communiquer à un utilisateur, pendant la transaction, des informations de transaction provenant du terminal (ou lecteur) par l'intermédiaire d'un adaptateur, ledit adaptateur étant configuré pour recevoir, avec ou sans fil, lesdites informations et les traduire sous forme vocale ou autre,
caractérisé en ce qu'il comprend l'étape selon lesquelles lesdites informations de transaction communiquées à l'adaptateur sont obtenues ou collectées dans ou via ladite carte à puce.

Selon d'autres caractéristiques ou modes préférés
- Lesdites informations de transaction peuvent être dérivées en parallèle de celles reçues par ladite carte à puce ;
- Alternativement, lesdites informations de transaction peuvent être traitées ou sélectionnées par la puce de la carte à puce ;
- Ladite carte à puce peut être configurée avec une interface de communication radiofréquence parmi Bluetooth, WIFI, UHF, NFC, LIFI, pour transmettre ou communiquer lesdites informations à l'adaptateur ;
- Ledit adaptateur peut comprendre un téléphone mobile, une oreillette sans fil dotée d'une interface de communication adaptée à celle de l'interface de communication de la carte ;
- Le lecteur (ou terminal) peut comprendre comprend un lecteur POS ou terminal bancaire ATM.
- Ledit adaptateur peut comprendre une application logicielle configurée pour traduire ou transposer des informations numériques ou analogiques en informations vocales ou autre sur une interface homme / machine et inversement ; L'application logicielle peut aussi permettre de traduire dans une langue quelconque et/ou en devise quelconque les informations reçues notamment le montant de la transaction.

L'invention a également pour objet un système correspondant au procédé ci-dessus. En particulier, elle a pour objet un système pour réaliser une transaction, comprenant un terminal de transaction (ou lecteur de carte à puce), un dispositif personnel de transaction (ou une carte à puce) et un adaptateur, ledit système étant configuré pour communiquer à un utilisateur, pendant la transaction , des informations de transaction provenant du terminal (ou lecteur) par l'intermédiaire de l'adaptateur, ledit adaptateur étant configuré pour recevoir, avec ou sans fil, lesdites informations et les traduire sous forme vocale ou autre,
caractérisé en ce qu'il est configuré de manière que lesdites informations de transaction communiquées à l'adaptateur sont obtenues ou collectées dans ou via ledit dispositif de transaction personnel, (tel une carte à puce).

L'invention a également pour objet une carte à puce pour réaliser une transaction avec un terminal selon le procédé ci-dessus, caractérisée en ce qu'elle est configurée de manière à obtenir ou collecter des informations de transaction avec ledit terminal et les communiquer à un adaptateur associé avec lequel elle est appariée.

L'invention a également pour objet un adaptateur pour la mise en œuvre du procédé ci-dessus, ledit adaptateur de transaction étant configuré pour recevoir, avec ou sans fil, des informations de transactions provenant d'un terminal (ou un lecteur) et les traduire sous forme vocale ou autre, pendant une transaction,
caractérisé en ce qu'il est apparié avec une carte à puce de manière à recevoir lesdites informations de transaction avec ledit terminal.

### Brève description des figures.

- La figure 1 illustre un système général pour réaliser des transactions selon des modes généraux de mise en œuvre du procédé de l'invention ;
- Les figures 2 et 3 illustrent respectivement un premier mode de réalisation du système de transaction ainsi qu'un exemple de fonctionnement;
- Les figures 4 et 5 illustrent respectivement un second mode de réalisation du système de transaction ainsi qu'un exemple de fonctionnement;
- Les figures 6 et 7 illustrent respectivement un troisième mode de réalisation du système de transaction ainsi qu'un exemple de fonctionnement.

### Description.

Les mêmes références d'une figure à l'autre, indiquent des constituants identiques ou similaires.
L'invention est principalement décrit en relation avec un terminal POS mais d'autres lecteurs ou terminaux sont permutables dans les différents exemples. De même, une carte à puce est permutable par tout dispositif décrit dans chacun des exemples, tel une montre NFC, un téléphone ou montre en mode émulation carte.

De même, les fonctions du téléphone et/ou de la montre ou du casque ou oreillette peuvent être permutées dans les exemples.

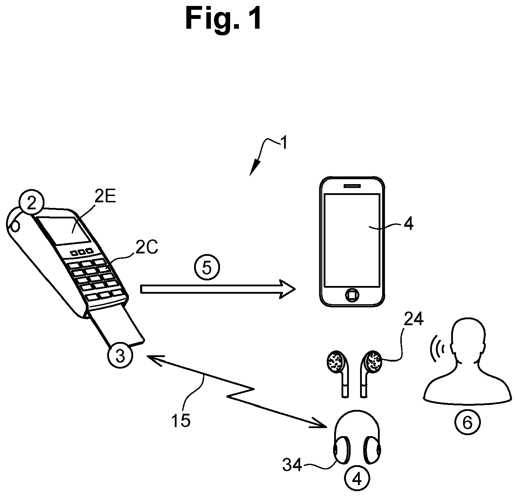

A la figure 1 est illustré un système pour réaliser une transaction selon un premier mode de mise en œuvre du procédé de l'invention.

Le système 1 peut comprendre un terminal de transaction 2 (ou lecteur de carte à puce) ou terminal de paiement POS, ainsi qu'un dispositif de transaction 3 tel une carte à puce.
Le terminal 2 peut être un ATM, une borne de paiement, un distributeur de boissons, tout appareil de transaction effectuant une transaction électronique avec un dispositif de transaction d'un utilisateur ou un dispositif de paiement associé à un téléphone (ex : iZetlle, etc.).

Selon une caractéristique, le système est configuré pour communiquer à un utilisateur, pendant la transaction, des informations de transaction provenant du terminal (ou lecteur 2) par l'intermédiaire d'un adaptateur 4.

Les informations de transactions peuvent comprendre les données affichées normalement sur un terminal de paiement, telles que le choix du moyen de paiement (carte débit, crédit), le mode de paiement (contacts ou sans-contact), le montant, les devises, la demande de validation de l'utilisateur (via code confidentiel (PIN), signature, vérification biométrique, ou autre moyen), le statut de la validation de l'utilisateur et de la transaction. Alternativement, la transaction peut être une authentification pour notamment un accès physique et/ou logique à un bâtiment à un réseau informatique, des informations affichées telles que des instructions à un utilisateur 6, (attendez, passez...), ou authentification ou validation de l'utilisateur sur un dispositif électrique ou mobile (ex : validation ou signature d'une transaction, d'une commande, d'une opération..) .

Cet adaptateur 4 peut être configuré pour recevoir, avec ou sans fil, les informations 5 et les traduire sous forme vocale ou autre de manière à être compris par l'utilisateur 6. Il peut comprendre une application permettant d'apparier l'adaptateur avec la carte notamment avec des protocoles de communication sécurisés. Une fois que l'appairage est établi, le procédé de l'invention peut prévoir de chiffrer ou coder toutes les informations reçues ou du moins certaines sensibles ou confidentielles. Des clés de chiffrement (ou des secrets) ou clés secrètes peuvent être partagées entre la carte et l'adaptateur pour chiffrer ou code la communication entre eux.

Dans l'art antérieur, le système 1 peut comprendre une interface audio (non représentée) sur laquelle un utilisateur peut brancher un casque audio sur le terminal. Toutefois l'invention, prévoit une autre configuration technique décrite ultérieurement.

Dans l'exemple préféré, le terminal 2 est un terminal bancaire de paiement POS, conforme à ceux actuellement sur le marché. Il comprend une structure sécurisée et des fonctions homologuées / standardisées EMV (Europay Mastercard Visa), qui est le standard international des transactions de paiement sécurisées. Le POS peut être doté notamment d'un lecteur de carte à contact 3 (ou sans-contact), et d'interface (s) homme / machine tels que clavier 2C, écran 2^{E} ainsi que de moyens de communication sans-contact notamment NFC (Near Field Communication - radiofréquence de proximité) avec un téléphone intelligent 4 ou une carte sans-contact.

Dans l'exemple figure 1, le terminal 2 comprend une interface à contacts électriques pour échanger 15 avec la carte via un bornier de contacts électriques ou module à contacts M3.

Le terminal 2 peut être doté de préférence d'un module de sécurité à puce électronique SAM et des moyens électroniques chiffrés pour communiquer avec un serveur central bancaire (notamment pour une collecte périodique des informations de transaction et/ou de mise à jour, ou pour une validation online en temps réel), ou un serveur de (ou pour) marchands.

Alternativement, le dispositif de transaction électronique 3, quant à lui, peut constituer ou comprendre tout dispositif de paiement avec des applications bancaires de paiement, ou pouvant simuler / émuler des cartes bancaires (par exemple montre intelligente, badge, bracelet porte-monnaie électronique...) .

Le dispositif 3 peut être sous forme de carte mais aussi alternativement sous forme de téléphone intelligent. Le téléphone peut comprendre une fonction d'émulation carte sans-contact selon le standard ISO 14443 et/ou ISO/IEC 18092 de manière à communiquer directement avec le terminal 2 (POS) en étant perçu par lui comme une carte à puce ou un « device » de paiement.

Le dispositif 3 peut intégrer également des circuits électroniques ou des puces à circuit intégré. Il peut intégrer une interface homme / machine ici sous forme d'un écran tactile. Il peut intégrer des applications ou programmes de fonctionnement applicatifs, stockés en mémoire notamment EEPROM ou flash pour notamment effectuer des opérations bancaires, de fidélité ou autres. Ces programmes applicatifs peuvent être exécutés par une unité de traitement principal µC2, 13 ou dans un ou des circuits électroniques ou des puces électroniques à circuits intégrés associés tel un élément de sécurité électronique « eSE notamment dans un téléphone ou une montre ».

Le dispositif 3 peut intégrer une fonction de réception des données de transaction du terminal 2. Il peut intégrer une interface NFC pour recevoir des données de transaction émises également en mode radiofréquence NFC.

Selon une caractéristique du mode préféré, le procédé comprend l'étape selon lesquelles lesdites informations de transaction communiquées à l'adaptateur 4 sont obtenues ou collectées dans ou via ladite carte à puce 3 (ou autre dispositif personnel de transaction).

Selon une première implantation ou configuration matérielle et logicielle du dispositif de transaction 3 (tel que la carte), les informations de transaction 5 peuvent être dérivées en parallèle de celles 15 reçues par le dispositif à puce 3.
Par exemple, l'invention peut prévoir une puce espion supplémentaire 14 ou 34 qui est connectée en parallèle aux plots de communication de la puce de la carte. L'invention peut prévoir une puce électronique supplémentaire 14 ou 34, (connectée à l'élément de sécurité SE, 13 ou EMV), qui est configurée pour communiquer les informations nécessaires à l'utilisateur, extraites de la transaction en cours.

Alternativement, les informations de transaction 5 peuvent être traitées ou sélectionnées par la puce applicative 13 du dispositif de transaction à puce. Cette même puce 13 peut transmettre ces informations 5 à une autre puce (ou microcontrôleur) 14 chargée de transmettre à l'extérieur notamment l'adaptateur 4 via une interface de communication appropriée non représentée).

La carte peut être agencée ou configurée ou équipée avec une interface de communication radiofréquence parmi Bluetooth, WIFI, UHF, NFC, LIFI, infrarouge, optique pour transmettre ou communiquer lesdites informations à l'adaptateur 4. Cette interface peut appartenir ou être reliée à un microcontrôleur 14 correspondant notamment BLE. Cette interface peut appartenir à la puce 13.

Selon une caractéristique, l'adaptateur 4 peut comprendre un téléphone mobile 4 ou une oreillette sans fil 24 dotée d'une interface de communication adaptée à celle de l'interface de communication du dispositif de transaction personnel 3.

L'adaptateur 4 peut comprendre de préférence une application logicielle 41 configurée pour traduire ou transposer des informations numériques ou analogiques 5 (reçues de la carte notamment par toute communication notamment BLE) en informations vocales ou autre sur une interface homme / machine et inversement.

Selon un mode préféré, l'adaptateur 4 peut être similaire au téléphone intelligent décrit ci-dessus. Il peut en outre être configuré pour échanger avec la carte à puce 3 ou une carte à puce interne émulée dans le téléphone.

L'adaptateur peut comprendre un téléphone mobile 4, une oreillette sans fil 24 dotée d'une interface de communication adaptée à celle de l'interface de communication du dispositif à puce 3.

L'application bancaire NFC du dispositif 3 (ce dernier pouvant être notamment sous forme de téléphone portable, montre intelligente...) peut être configurée pour extraire des données de la transaction et les transmettre sous forme audio à l'utilisateur notamment via une oreillette Bluetooth 24 (ou casque filaire ou sans fil 34) connecté sur le dispositif 3.

### Description de modes particuliers de réalisation.

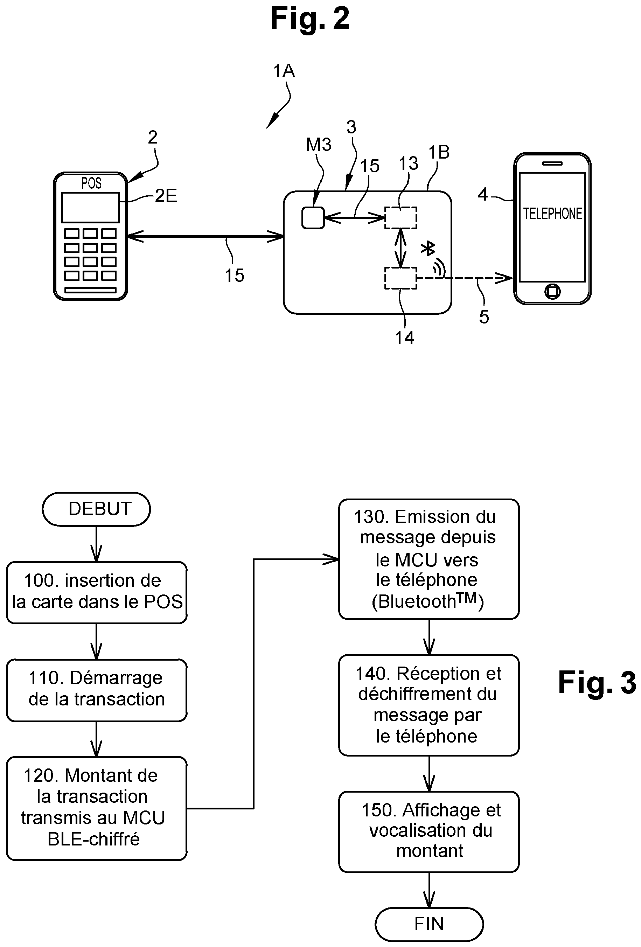

A la figure 2, le système comprend une carte ayant une puce applicative 13 notamment bancaire EMV connectée à une interface de communication à contacts M3. L'interface peut être aussi une interface à antenne radiofréquence (non représentée. L'interface de la carte M3 est configurée pour établir une communication 15 avec le terminal 2. La communication peut être radiofréquence de proximité ou une communication par contacts électriques.

La puce applicative 13 selon ce mode peut être reliée à un microcontrôleur MCU 14 ayant une interface de communication radiofréquence de moyenne portée. Par exemple, cette dernière interface peut être une interface BLE (Bluetooth™ Low Energy en terminologie anglo-saxonne).

Le microcontrôleur 14 est configuré pour recevoir des informations de transactions transmises par la puce applicative 13. Cette dernière peut être configurée pour sélectionner des informations de transactions minimales qui lui parviennent via le terminal 2 telles que celles qui sont normalement affichées sur l'écran du terminal 2E.

A la figure 3 sont illustrées des étapes relatives au fonctionnement du système 1B de la figure précédente. Un utilisateur désireux d'effectuer un achat chez un marchand, présente ou introduit (étape 100) sa carte bancaire (présente sa montre...) au terminal 2. Dans l'exemple, Figure 3, la carte est insérée dans le terminal POS. Puis à l'étape 110, la transaction de paiement d'un article achetée débute avec des échanges classiques conformes à des standards de paiement notamment EMV entre le terminal 2 et la puce applicative 13. A l'étape 120, le montant de la transaction est transmis au microcontrôleur 14 MCU BLE. Cette transmission peut être sécurisée et/ou le montant peut être de préférence chiffré. Puis, à l'étape 130, le MCU 14 procède à l'émission d'un message 5 contenant tout ou partie des informations reçues vers l'adaptateur 4, ici un téléphone portable.
A l'étape 140, le téléphone 140 via une application dédiée, procède à la réception et déchiffrement du message 5 provenant de la carte 3. Puis, à l'étape 150, le téléphone procède à l'affichage et / ou vocalisation du message reçu déchiffré. Le cas échéant, l'utilisateur à branché un casque audio sur son téléphone et peut recevoir le message audio dans son casque.

Alternativement, l'utilisateur peut disposer d'une oreillette appariée avec son téléphone pour recevoir le message reçu par son téléphone (adaptateur). Alternativement, l'utilisateur peut disposer d'une oreillette qui est configurée pour recevoir directement le message émis par la carte via le microcontrôleur MCU 14.

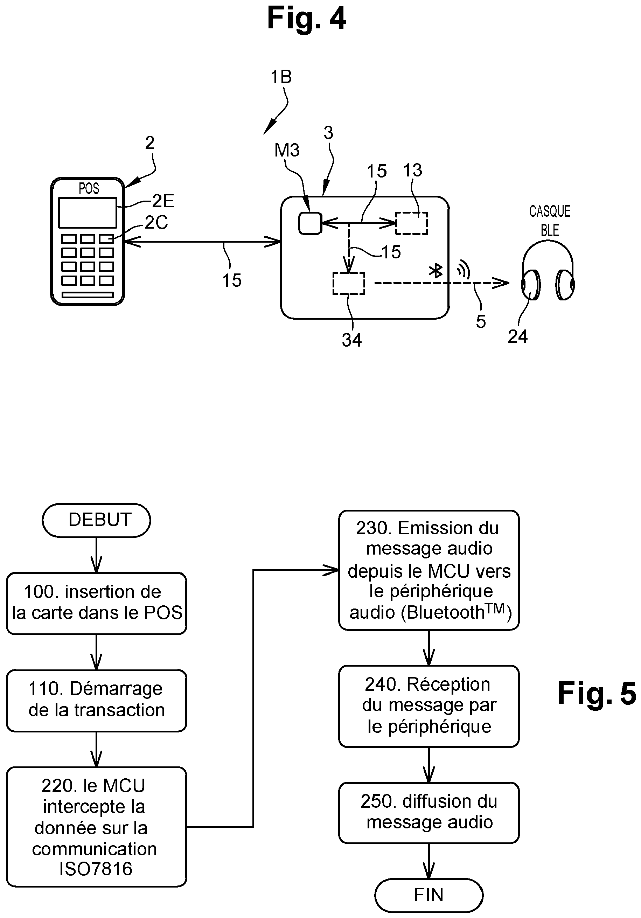

A la figure 4, le système 1B diffère du précédent en ce le microcontrôleur 14 est configuré de manière à espionner les informations 15 échangées entre la puce 13 et le terminal 2 et en ce que l'adaptateur 4 comprend ou est constitué par un périphérique audio 24 tel qu'une oreillette (ou un casque audio).
Pour espionner, le microcontrôleur 14 peut être branché en parallèle sur l'interface à contact ou sans contact M3 par exemple. L'oreillette ou le casque 24 peut avoir les fonctions décrites précédemment en relation avec le téléphone 4. L'adaptateur de ce mode peut donc comprendre tout ou partie des fonctions ou moyens matériels et logiciel du téléphone 4

A la figure 5 sont illustrées des étapes relatives au fonctionnement du système 1B de la figure 4. Les étapes 100 à 110 sont identiques à celles du système précédent 1B. A l'étape 220. Le MCU 34 intercepte les échanges 15 sur la communication ISO 7816 entre le terminal et la puce applicative 13 notamment EMV et il est configuré pour transformer le message 5 capté (éventuellement trié) en signal audio à destination d'un périphérique audio 24. Alternativement, le MCU 34, retransmet le message numérique au périphérique et ce dernier le transforme en fichier audio et le diffuse à l'utilisateur.

Le MCU 14 peut être configuré ou paramétré pour extraire uniquement certaines (5) ou la totalité (15) des informations échangées telles que le montant, le type de paiement comptent ou à crédit .... Par exemple, des indicateurs de contenu du message sont détectés par le MCU 34 pour extraire les informations requises par l'utilisateur. Le MCU 14 peut notamment être configuré ou paramétré pour écouter l'ensemble de la communication qui circule sur le canal ISO 7816, et en extraire les données requises par l'utilisateur.

Puis à l'étape 230, le système 1B procède à l'émission du message audio depuis le MCU 34 vers le périphérique audio (selon un protocole de communication courte ou moyenne portée notamment Bluetooth™ faible énergie BLE).
Puis à l'étape 240, le périphérique audio 24 procède à la réception du message (5 ou 15) pour le diffuser dans la foulée (250) à l'utilisateur.

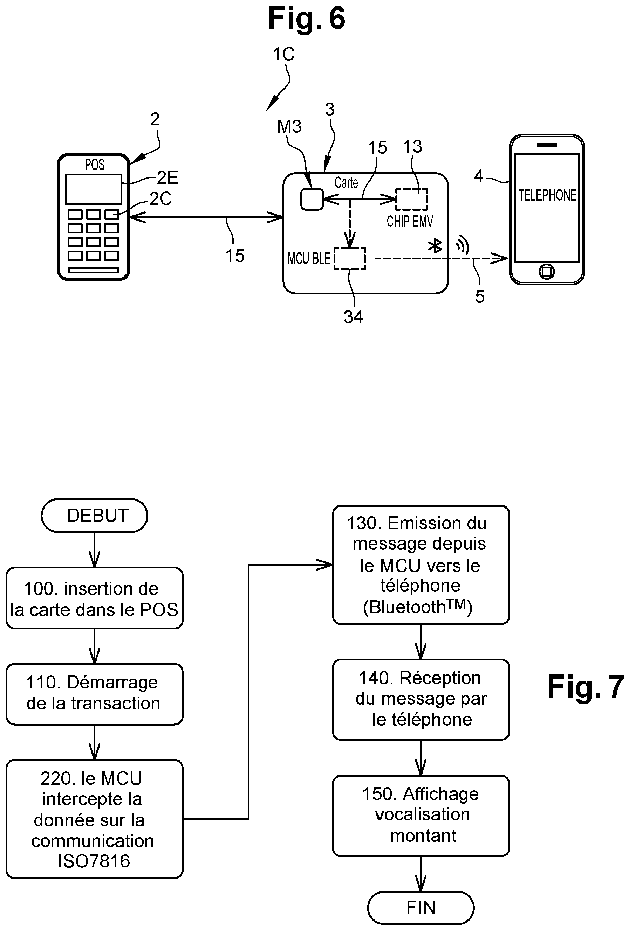

A la figure 6, le système 1C est similaire à celui de la figure 2. Il diffère simplement par le MCU. Le MCU 34 ici distinct du MCU 14 est configuré pour espionner et extraire tout ou partie des informations échangées entre le terminal et la puce applicative 13 comme au système 1B de la figure 4. Le système 1C diffère aussi en ce que les données numériques ou informations 5, 15 espionnées peuvent être reçues par le téléphone 4 et peuvent être transformées en information audio par le téléphone.
Alternativement exprimé, le système 1C (fig. 6) peut différer du système 1B (Fig. 4) uniquement par l'adaptateur 4. Le système 1C comprend un casque audio connecté directement au dispositif de transaction 3 notamment par BLE, ou wifi ou tout autre protocole de communication.

A la figure 7 sont illustrées des étapes relatives au fonctionnement du système 1C de la figure précédente.

Les étapes 100 et 110 sont identiques à celles de la figure 3. Puis l'étape 220 est identique à celle de la figure 2 dans laquelle le MCU 34 intercepte les données par espionnage de la communication 15 entre le terminal 2 et la puce applicative 13.
Ensuite, les étapes 130 à 150 peuvent être identiques à celles de la figure 3 dans lesquelles, le message (chiffré ou non) émis par la carte en BLE et reçu par l'adaptateur (téléphone) est affiché et/ou vocalisé (transformé par ce dernier en signal audio).

A cet effet, dans tous les exemples, le MCU 14, 34 ou l'adaptateur 4, 24 peut comprendre une application configurée pour transformer un fichier contenant un message numérique en fichier audio. Le fichier audio peut être ensuite transformé en signal audible par l'utilisateur sur un haut-parleur de l'adaptateur 4 ou oreillette ou casque audio 24.

## Revendications

1. Procédé pour réaliser une transaction avec un système (1, 1A, 1B, 1C) comprenant un terminal (2) et un dispositif à puce (3), ledit système étant configuré pour communiquer à un utilisateur (6), pendant ladite transaction, des informations de transaction provenant du terminal par l'intermédiaire d'un adaptateur (4), ledit adaptateur étant configuré pour recevoir, avec ou sans fil, lesdites informations (5) et les traduire sous forme vocale ou autre, **caractérisé en ce qu'**il comprend l'étape selon lesquelles lesdites informations de transaction (5) communiquées à l'adaptateur (4) sont obtenues ou collectées dans ou via ladite carte à puce (3).

2. Procédé selon la revendication précédente, **caractérisé en ce que** lesdites informations de transaction (5) sont dérivées en parallèle de celles reçues par ladite carte à puce.

3. Procédé selon la revendication précédente, **caractérisé en ce que** lesdites informations de transaction sont traitées ou sélectionnées par la puce de la carte à puce.

4. Procédé selon l'une des revendications 2 ou 3, **caractérisé en ce que** ledit carte est agencée avec une interface de communication radiofréquence parmi Bluetooth, WIFI, UHF, NFC, LIFI, pour transmettre ou communiquer lesdites informations à l'adaptateur.

5. Procédé selon l'une des revendications précédentes, **caractérisé en ce que** ledit adaptateur comprend un téléphone mobile, une oreillette sans fil dotée d'une interface de communication adaptée à celle de l'interface de communication de la carte.

6. Procédé selon l'une des revendications précédentes, **caractérisé en ce que** le lecteur comprend un lecteur POS ou terminal bancaire ATM.

7. Procédé selon l'une des revendications précédentes, **caractérisé en ce que** ledit adaptateur comprend une application logicielle configurée pour traduire ou transposer des informations numériques ou analogiques en informations vocales ou autre sur une interface homme / machine et inversement.

8. Système (1, 1A, 1B, 1C) pour réaliser une transaction, comprenant un lecteur de carte à puce (2), une carte à puce (3) et un adaptateur (4), ledit système étant configuré pour communiquer à un utilisateur (6), pendant la transaction, des informations (5) de transaction provenant du lecteur (2) par l'intermédiaire de l'adaptateur (4), ledit adaptateur étant configuré pour recevoir, avec ou sans fil, lesdites informations (5) et les traduire sous forme vocale ou autre,
**caractérisé en ce qu'**il est configuré de manière que lesdites informations de transaction (5) communiquées à l'adaptateur (4) sont obtenues ou collectées dans ou via ladite carte à puce (3).

9. Carte à puce (3) pour réaliser une transaction avec un terminal (2) selon le procédé de l'une quelconque des revendications 1 à 7, **caractérisée en ce qu'**elle est configurée de manière à obtenir ou collecter des informations de transaction (5, 15) avec ledit terminal (2) et les communiquer (5) à un adaptateur associé (4).

10. Adaptateur de transaction (4) pour la mise en œuvre du procédé de l'une quelconque des revendications 1 à 7, ledit adaptateur étant configuré pour recevoir, avec ou sans fil, des informations de transactions (5, 15) provenant d'un terminal (2) et les traduire sous forme vocale ou autre, pendant une transaction,
**caractérisé en ce qu'**il est apparié avec une carte à puce selon la revendication 9 de manière à recevoir lesdites informations de transaction (5, 15) avec ledit terminal.
